Europäisches Patentamt

European Patent Office

Office européen des brevets

(19)

(11) Veröffentlichungsnummer: **0 162 803**
**B1**

(12) **EUROPÄISCHE PATENTSCHRIFT**

(45) Veröffentlichungstag der Patentschrift:
12.07.89

(21) Anmeldenummer: 85810059.7

(22) Anmeldetag: 15.02.85

(51) Int. Cl.⁴: **G 01 B 7/28,** G 01 M 13/02

(54) Zweiflanken-Wälzprüfgerät.

(30) Priorität: 01.03.84 CH 996/84

(43) Veröffentlichungstag der Anmeldung:
27.11.85 Patentblatt 85/48

(45) Bekanntmachung des Hinweises auf die Patenterteilung:
12.07.89 Patentblatt 89/28

(84) Benannte Vertragsstaaten:
FR GB IT

(56) Entgegenhaltungen:
DD-B-126 965
US-A-3 693 431
US-A-4 350 041
US-A-4 488 359

(73) Patentinhaber: **Maag- Zahnräder und -Maschinen Aktiengesellschaft, Hardstrasse 219, CH- 8023 Zürich (CH)**

(72) Erfinder: **Späth, Hans, Wallisellerstrasse 3, CH- 8302 Kloten (CH)**

(74) Vertreter: **Travnicek, Richard, MAAG- ZAHNRÄDER & -MASCHINEN AG Patentabteilung Hardstrasse 219, CH- 8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 162 803 B1

**Beschreibung**

Die Erfindung betrifft ein Zweiflanken-Wälzprüfgerät der im Oberbegriff des Patentanspruchs 1 angegebenen Art.

Ein solches bekanntes Zweiflanken-Wälzprüfgerät (MAAG-Firmenprospekt "DAS-2", A53a-D 8.78) dient zur raschen Ermittlung des Gesamteinflusses aller Verzahnungsfehler an Gerad- und Schrägstirnrädern mit Außen- oder Innenverzahnungen sowie an Kegelrad- und Schneckengetrieben durch Abrollen von zwei Rädern in spielfreiem Eingriff. Das bekannte Zweiflanken-Wälzprüfgerät besteht aus einem Bett aus Grauguß, auf dessen Flachführungen je ein festklemmbarer Schlitten und ein beweglicher, unter Federdruck stehender Schlitten angeordnet sind. Diese beiden Schlitten tragen die beiden Aufnahmevorrichtungen für die zu prüfenden Zahnräder. Auf dem beweglichen Schlitten ist ferner eine Meßuhr angebracht. Manuell werden die zu prüfenden Zahnräder in eine derartige Relativlage gebracht, daß sich auf einer die Mittelachsen der beiden Aufnahmevorrichtungen miteinander verbindenden Linie ein Zahnkopf des einen Rades und eine Zahnlücke des anderen Rades gegenüberliegen. Durch Verschieben des festklemmbaren Schlittens werden dann die beiden Verzahnungen in spiellosen Eingriff gebracht, indem der Betriebsachsabstand der beiden Zahnräder genau eingestellt wird und dann der festklemmbare Schlitten festgeklemmt wird. Der bewegliche Schlitten, der die Meßuhr trägt, ist auf Kugeln gelagert und wird durch den Federdruck in seiner Endlage gehalten. Sobald das im Eingriff befindliche Räderpaar manuell oder durch einen Antrieb in Drehung versetzt wird, überträgt der bewegliche Schlitten seine Bewegungen auf die Meßuhr oder auf ein Schreibgerät, mit dem die Gesamteinflüsse aller Verzahnungsfehler aufgezeichnet werden können. In letzterem Fall erhaltene Diagramme lassen sich dann nach verschiedenen Gesichtspunkten auswerten: Rundlauffehler sind Veränderungen des Achsabstandes während einer Umdrehung der Räder; Teilungsfehler machen sich im Diagramm durch sprungweise, unregelmäßig auftretende, verschieden große Ausschläge von Zahn zu Zahn bemerkbar; Zahnformfehler sind Abweichungen von der dem zugehörigen Grundkreis entsprechenden Evolvente und ergeben einen wellenförmigen Diagrammverlauf; Eingriffswinkelfehler treten bei fehlerhafter Lage des Zahnprofils zum Grundkreis auf und machen sich im Diagramm durch regelmäßig auftretende Ausschläge bemerkbar.

Bei dem bekannten Zweiflanken-Wälzprüfgerät müssen, wie dargelegt, vor dem Ineingriffbringen der Verzahnungen diese manuell aufeinander ausgerichtet werden, damit ein Zahn einer Zahnlücke gegenübersteht und so eine Kollision zwischen einem Zahnkopf des einen Rades und einem Zahnkopf des anderen Rades verhindert wird. Dieser manuelle Ausrichtvorgang ist für einen in eine Fertigungsstraße integrierten Meßprozeß zu zeitaufwendig, so daß das bekannte Zweiflanken-Wälzprüfgerät in diesem Fall nicht verwendet werden kann.

Aufgabe der Erfindung ist es, ein Zweiflanken-Wälzprüfgerät der eingangs genannten Art so auszubilden, daß die Verzahnungen eines Räderpaares vor dem Zusammenfahren in den spiellosen Eingriff automatisch so ausgerichtet werden, daß ein Zahn einer Zahnlücke gegenübersteht und so eine Kollision zwischen einem Zahnkopf des einen Rades und einem Zahnkopf des anderen Rades verhindert wird.

Diese Aufgabe ist durch die im Kennzeichen des Patentanspruchs 1 angegebenen Merkmale gelöst.

Gemäß der Erfindung wird das eine Rad auf stets gleiche Weise positioniert, indem das durch den Magnet erzeugte magnetische Kraftfeld einen Radzahn in einer ausreichend eng begrenzten Stellung festhält. Der Magnet gewährleistet also, daß die Verzahnung des einen Rades vor dem Einfahren in die Verzahnung des anderen Rades eine stets gleiche Drehstellung aufweist und in dieser festgehalten ist. Da diese stets gleiche Drehstellung im voraus bekannt ist, kann mittels der dem anderen Rad erfindungsgemäß zugeordneten Positioniervorrichtung das andere Rad in die bestimmte Relativlage zu der Drehstellung des einen Rades gebracht werden, was das kollisionsfreie Zusammenfahren der Räder gestattet.

Das Zweiflanken-Wälzprüfgerät nach der Erfindung kann deshalb in einem in eine Fertigungsstraße integrierten automatischen Meßprozeß eingesetzt werden, da die Zahnräder auf dem Zweiflanken-Wälzprüfgerät vor dem Zusammenfahren automatisch aufeinander ausgerichtet werden. Dadurch wird der manuelle Arbeitsgang des Ausrichtens beseitigt und es ergibt sich darüber hinaus eine beträchtliche Zeitersparnis.

In der Ausgestaltung der Erfindung nach den Ansprüchen 2 und 3 dient als Magnet ein Permanent- bzw. Elektromagnet, je nach den gestellten Anforderungen hinsichtlich Masse, Trägheits- und Reibungsmomenten, Drehmomentverhältnissen usw.

Durch die in Radumfangs- und/oder -radialrichtung vorgesehene Verstellmöglichkeit des Magnets und/oder der Positioniervorrichtung in der Ausgestaltung nach Anspruch 4 läßt sich das Zweiflanken-Wälzprüfgerät nach der Erfindung auf einfache Weise an unterschiedliche Zähnezahlen bzw. Raddurchmesser anpassen.

In der Ausgestaltung der Erfindung nach Anspruch 5 hat die Positioniervorrichtung den einfachsten Aufbau, der überhaupt möglich ist. In diesem Fall werden nämlich beide Zahnräder mittels Magneten in eine definierte Relativlage zueinander gebracht, die durch entsprechendes vorheriges Einstellen der Magnete in Abhängigkeit von den Daten der zu prüfenden Räder leicht festgelegt werden kann.

In der Ausgestaltung der Erfindung nach den Ansprüchen 6 bis 9 hat die Positioniervorrichtung zwar einen etwas aufwendigeren Aufbau, dieser kann jedoch in gewissen Fällen erforderlich sein, beispielsweise wenn der Drehantrieb bei einem vorhandenen Zweiflanken-Wälzprüfgerät nicht ohne weiteres für den Ausrichtvorgang abkuppelbar ist oder das auszurichtende Rad aus einem nicht magnetisierbaren Material besteht, usw.

In der Ausgestaltung der Erfindung nach Anspruch 10 wirkt der Magnet direkt auf die Verzahnung des

**EP 0 162 803 B1**

Zahnrades ein, was den einfachsten Fall darstellt.

In der Ausgestaltung der Erfindung nach Anspruch 11 ist die Verzahnung, auf die der Magnet einwirkt, an einem koaxialen, mit dem zugeordneten Rad formschlüssig verbindbaren Positionierrad vorgesehen. Das bietet die Möglichkeit, die Zähne, auf die der Magnet einwirkt, hinsichtlich Form und/oder Material zu optimieren. Ferner läßt sich die Positionierverzahnung leichter vor Verschmutzung schützen, weil das Positionierrad üblicherweise unterhalb des ihm zugeordneten Rades angeordnet wird.

In der Ausgestaltung der Erfindung nach Anspruch 12 sind an dem Positionierrad statt Zähnen einfach Stege vorgesehen, die eine noch einfachere Optimierung gestatten und die Herstellung des Positionierrades wesentlich verbilligen.

In der Ausgestaltung des Zweiflanken-Wälzprüfgerätes nach Anspruch 13 eignet sich dieses insbesondere zur Ermittlung von Radverzahnungsfehlern an zwei starr miteinander verbundenen Rädern, deren Verzahnungen gleichzeitig geprüft werden sollen und deren Gegenräder, mit denen sie im tatsächlichen Betrieb im Eingriff sind, für den Meßvorgang nicht zur Verfügung stehen. In diesem Fall läßt sich auf einfache Weise feststellen, ob die Achsabstandsabweichungen innerhalb eines bestimmten Toleranzbereiches liegen, um die geprüften Zahnräder als gut oder als Ausschuß zu deklarieren.

Da die beiden Drehstellungen, in die die Lehrräder zu bringen sind, eine bestimmte, durch die Daten der zu prüfenden Räder festgelegte Relativlage zueinander haben, lassen sich in der Ausgestaltung der Erfindung nach Anspruch 14 beide Lehrräder gleichzeitig mit den zu prüfenden Rädern zusammenfahren. In dieser Ausgestaltung der Erfindung ergibt sich der einfachste Aufbau des Zweiflanken-Wälzprüfgerätes, Wenn auch die Positioniervorrichtung als Magnet ausgebildet wird, der in Umfangsrichtung der zu prüfenden Zahnräder einstellbar ist, und wenn die Aufnahmevorrichtung der zu prüfenden Zahnräder ausreichend leichtgängig ist oder die Möglichkeit besteht, ihren Drehantrieb für den Ausrichtvorgang abzukuppeln.

Ausführungsbeispiele der Erfindung werden im folgenden unter Bezugnahme auf die Zeichnungen näher beschrieben. Es zeigt

Fig. 1   eine schematische Seitenansicht einer Ausführungsform des Zweiflanken-Wälzprüfgerätes nach der Erfindung,

Fig. 2   in einer Teilansicht in Richtung des Pfeils II in Fig. 1 eine Art der Anordnung eines auf eine Verzahnung einwirkenden Magneten,

Fig. 3   eine weitere Art der Anordnung des Magneten, der auf eine Verzahnung einwirkt, die an einem Positionierrad vorgesehen ist,

Fig. 4   eine Teilansicht in Richtung des Pfeils IV in Fig. 1 und

Fig. 5   eine zweite Ausführungsform des Zweiflanken-Wälzprüfgerätes nach der Erfindung,

Fig. 6   ein Detail aus Fig. 5.

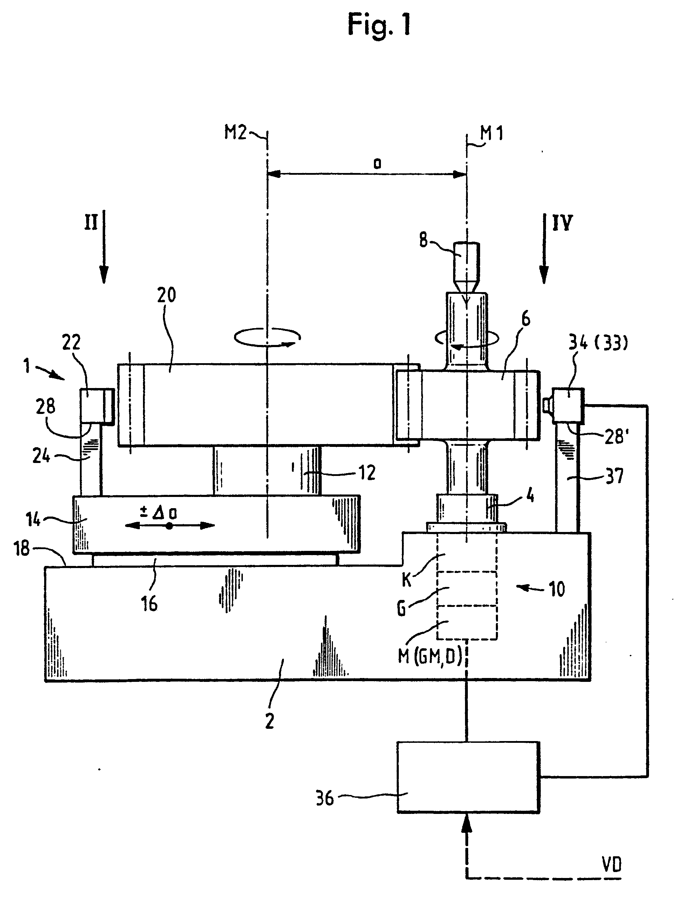

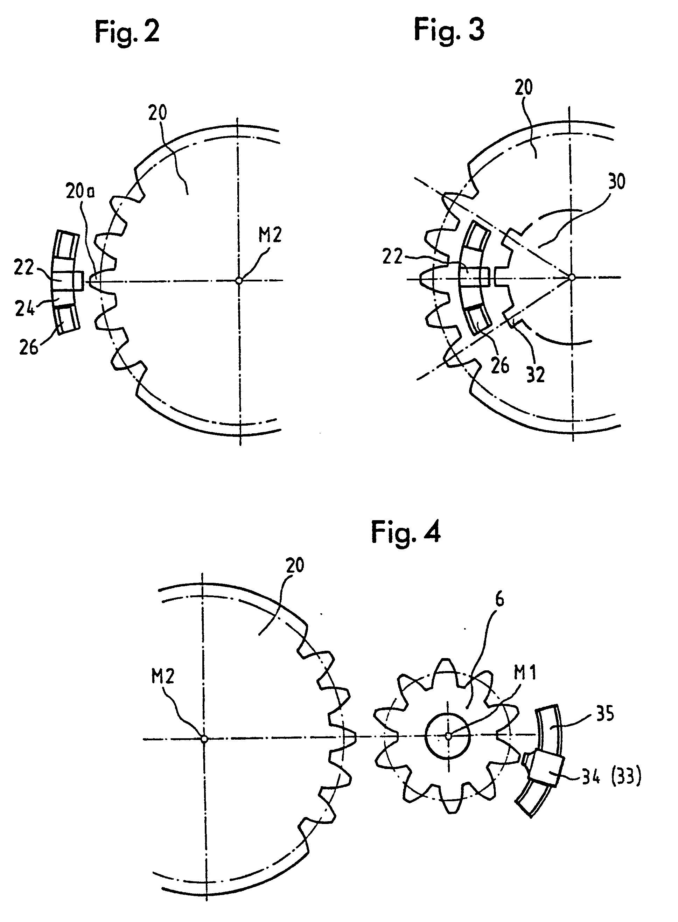

Fig. 1 zeigt schematisch den grundsätzlichen Aufbau eines Zweiflanken-Wälzprüfgerätes, das in seiner Gesamtheit mit der Bezugszahl 1 bezeichnet ist. Es hat ein Bett 2, auf dem eine Aufnahmevorrichtung 4 für ein zu prüfendes Zahnrad 6 befestigt ist. Das Zahnrad 6 wird auf einer Seite von der Aufnahmevorrichtung 4 aufgenommen und auf der anderen Seite durch eine herkömmliche Spitze 8, die Teil der Aufnahmevorrichtung 4 ist, gehalten. Unterhalb der Aufnahmevorrichtung 4 ist ein in seiner Gesamtheit mit der Bezugszahl 10 bezeichneter Drehantrieb angeordnet, der aus einem Motor M, einem Getriebe G und einer Kupplung K besteht, wie schematisch dargestellt. Eine weitere Aufnahmevorrichtung 12 ist auf einem beweglichen Schlitten 14 befestigt, der auf einem weiteren Schlitten 16 verschiebbar gelagert ist, welcher seinerseits auf einer Flachführung 18 auf dem Bett 2 verschiebbar gelagert ist. Die Aufnahmevorrichtung 12 nimmt ein weiteres zu prüfendes Zahnrad 20 auf, bei dem es sich um ein Lehrrad oder um dasjenige Zahnrad handeln kann, mit dem das Zahnrad 6 im Betrieb tatsächlich in Eingriff gebracht wird. Mittels des Schlittens 16 ist der Schlitten 14 mit der Aufnahmevorrichtung 12 und dem Zahnrad 20 von der Aufnahmevorrichtung 4 weg und zu dieser hin verfahrbar. Mittels des Schlittens 16 wird der Betriebsachsabstand a zwischen den beiden Zahnrädern eingestellt, und mittels des Schlittens 14 Werden die Achsabstandsabweichungen $\pm \Delta a$ gemessen, die sich während der Drehung der in spiellosen Eingriff gebrachten Zahnräder 6, 20 ergeben, wie eingangs mit Bezug auf das bekannten Zweiflanken-Wälzprüfgerät erläutert. Das Zahnrad 20 ist durch die Aufnahmevorrichtung 12 frei drehbar gelagert, während das Zahnrad 6 durch den Drehantrieb 10 in Drehung versetzbar ist. Neben dem Umfang des Zahnrades 20 ist ein Magnet 22 auf einem Halter 24 befestigt. Der Halter 24 ist in einer in der Oberseite des Schlittens 14 gebildeten Umfangsnut 26 (in den Fig. 2 und 3 angedeutet) verschiebbar angeordnet und in dieser Nut in jeder Stellung festlegbar, beispielsweise durch eine nicht dargestellte Feststellschraube. In einem Bereich 28 ist der Magnet 22 auf dem Halter 24 verschiebbar gelagert, so daß seine Lage in bezug auf den Umfang des Zahnrades 20 nach Bedarf radial einstellbar ist. Das magnetische Kraftfeld des Magneten 22 wirkt auf einen Zahn 20a ein und hält diesen in einer eng begrenzten Stellung fest. Als Magnet 22 dient je nach den gestellten Anforderungen hinsichtlich Masse, Trägheits- und Reibungsmomenten, Drehmomentverhältnissen, usw. ein Permanentmagnet oder ein ein- und ausschaltbarer Elektromagnet. Wenn das Zahnrad 20 auf die Aufnahmevorrichtung 12 aufgesetzt worden ist, auf oder mit der es leichtgängig drehbar ist, wird es durch den Magneten 22 augenblicklich in eine Stellung gebracht, die in Fig. 2 gezeigt ist.

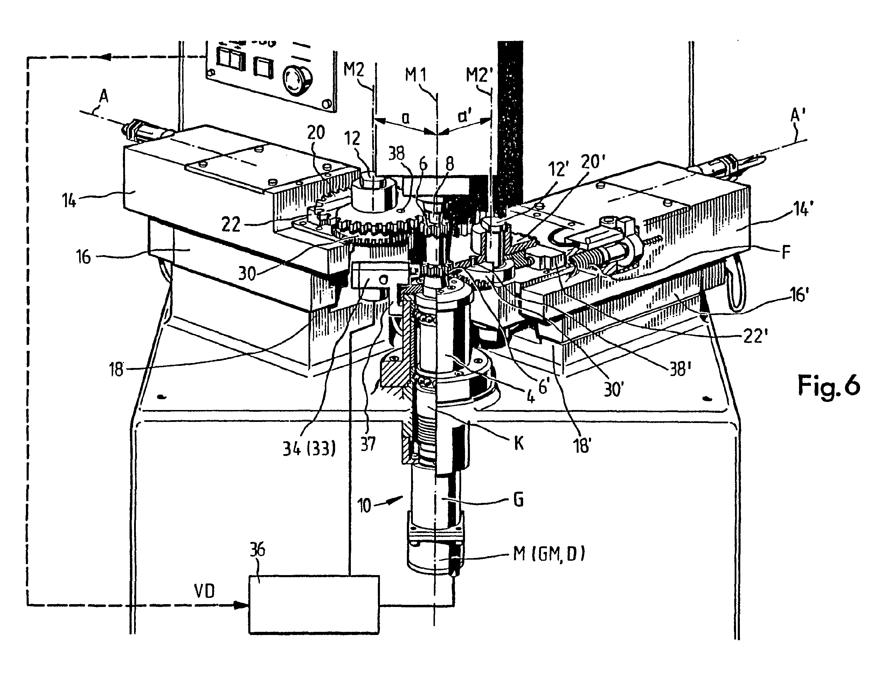

Gemäß der Darstellung in den Fig. 3 und 6 kann das Zahnrad 20 auch dadurch in einer stets gleichen Drehstellung positioniert werden, indem unter dem Zahnrad 20 ein Positionierrad 30 angeordnet wird, was in den Fig. 3 und 6 dargestellt ist. Das Positionierrad 30 trägt an seinem Außenumfang Zähne oder Stege 32, die

3

an dem Positionierrad angeformt oder in dieses eingesetzt sind und deren Anzahl gleich der Zähnezahl des Zahnrades 20 oder gleich einem geradzahligen Bruchteil (z. B. 1/2, 1/4, 1/6, usw.) ist. Das bietet die Möglichkeit, die Zähne oder Stege des Positionierrades 30 für die magnetische Erfassung formlich oder materialmäßig zu optimieren, eine Magnetisierung des Zahnrades 20 zu vermeiden und die Verzahnung, auf die der Magnet 22 einwirkt, leichter vor Verschmutzung zu schützen.

Auf dem Bett 2 ist neben dem Aussenumfang des Zahnrades 6 ein Sensor 34 angeordnet, bei dem es sich um einen induktiven, optischen oder mechanischen Zahnkopf- oder -lückensensor handeln kann. Der Sensor 34 gibt, wenn eine Relativbewegung zwischen ihm und dem Zahnrad 6 erfolgt, Impulse, deren Anfänge und Enden jeweils der Vorder- bzw. der Hinterflanke eines Zahnkopfes oder einer Zahnlücke des Zahnrades 6 entsprechen, an eine schematisch angedeutete Impulsverarbeitungseinrichtung 36 ab, die ihrerseits Impulse erzeugt, mit denen sie den Drehantrieb 10 ansteuert. Der Sensor 34, die Impulsverarbeitungseinrichtung 36 und der Drehantrieb 10 bilden eine Positioniervorrichtung, die das Zahnrad 6 in eine derartige Relativlage in bezug auf das durch den Magneten 22 positionierte Zahnrad 20 bringt, dass die Verzahnung beider Zahnräder kollisionsfrei in Eingriff gebracht werden können, indem der Schlitten 16 in Richtung des Zahnrades 6 so weit verfahren wird, bis der Betriebsabstand a eingestellt ist.

Der Sensor 34 ist in einem Bereich 28' auf seinem Halter 37 radial verstellbar. Der Halter 37 ist in einer gekrümmten Nut 35 (Fig. 4), deren Krümmungsmittelpunkt auf der Mittelachse M1 der Aufnahmevorrichtung 4 liegt, in Umfangsrichtung des Zahnrades 6 verstellbar. Der Sensor 34 wird bei dem Einrichtvorgang, der weiter unten noch ausführlicher beschrieben ist, so eingestellt, dass er auf die Mitte eines Zahnkopfes oder einer Zahnlücke des Zahnrades 6 weist. Über einen Eingang VD sind vorher die Verzahnungsdaten des Zahnrades 6 in die Impulsverarbeitungseinrichtung 36 eingegeben worden, so dass die Impulsverarbeitungseinrichtung in der Lage ist, beim Drehen des Zahnrades 6 duch den Drehantrieb 10 nach Massgabe der dann durch den Sensor 34 gelieferten Impulse und auf der Basis der Verzahnungsdaten die erforderlichen Impulse zu erzeugen, die dem Drehweg des Zahnrades 6 bis zu dessen Mittelstellung sprechen, in der sich eine Zahnlücke desselben genau gegenüber einem Zahn des Zahnrades 20 befindet, was in Fig. 4 dargestellt ist. Nachdem mittels letztgenannter Impulse diese Mittelstellung erreicht worden ist, wird der Motor M in dieser Stellung angehalten, so dass nun die Verzahnungen der Zahnräder 6 und 20 kollisionsfrei in Eingriff gebracht werden können, wie beschrieben.

Statt des Sensors 34 kann in der in Fig. 1 gezeigten Ausführungsform des Zweiflanken-Wälzprüggerätes ein Magnet 33 wie der Magnet 22 verwendet werden. In diesem Fall ist die Impulsverarbeitungsvorrichtung 36 nicht vorhanden. Es ist lediglich erforderlich, statt des Sensors 34 in Fig. 4 den diesen ersetzenden Magneten 33 in die in dieser Figur gezeigte Stellung zu bringen, damit dieser Magnet den ihm gegenüberliegenden Zahn in die dargestellte Stellung bringt, so dass wieder das kollisionsfreie Zusammenfahren der Verzahnungen möglich ist. Damit das Zahnrad 6 für diesen Zweck möglichst leichtgängig gelagert ist, wird der Motor M des Drehantriebs 10 durch die Kupplung K von der Aufnahmevorrichtung 4 abgekuppelt. Nachdem der Positioniervorgang durch den den Sensor 34 ersetzenden magneten 33 abgeschlossen ist, kann die Kupplung K wieder eingerückt werden.

Bei der Verwendung des Sensors 34 ist der Motor M des Drehantriebs 10 entweder ein Schrittmotor oder ein Gleichstrommotor GM mit zugeordnetem Drehgeber D (nicht im einzelnen dargestellt). Wenn statt des Sensors 34 der Magnet 33 verwendet wird, kann als Antriebsmotor M ein beliebiger Motor verwendet werden, da die gewünschte Drehstellung des Zahnrades 6 zum kollisionsfreien Zusammenfahren der Verzahnung dann nur durch den Magnet 33 eingestellt wird.

Bei dem in Fig. 1 - 4 dargestellten Zweiflanken-Wälzprüfgerät geht der Einrichtungvorgang folgendermassen vor sich:

Der neben dem Umfang des Zahnrades 20 angeordnete Magnet 22 wird so eingestellt, daß er das Zahnrad 20 nach dem Aufsetzen auf die Aufnahmevorrichtung 12 in stets gleicher Stellung positioniert, indem das magnetische Kraftfeld des Magneten 22 einen zahn 20a des Zanrades 20 in ausreichend eng begrenzter Stellung festhält, die in Fig. 4 gezeigt ist. Bei diesem Vorgang ist der Schlitten 14 mit Hilfe des Schlittens 16 in Fig. 1 ausreichend weit nach links verfahren, so daß der Abstand zwischen den beiden Mittelachsen M1 und M2 der Aufnahmevorrichtungen 4 bzw. 12 wesentlich größer ist als der Betriebsachsabstand a. Dann wird das Zahnrad 6 zwischen der Aufnahmevorrichtung 4 und der vertikal verstellbaren Spitze 8 in der in Fig. 1 gezeigten Stellung aufgenommen. Der Sensor 34 wird durch Verschieben seines Halters 37 in der Nut 35 so um die Mittelachse M1 geschwenkt, daß er gegenüber der Mitte eines Zahnkopfes oder einer Zahnlücke des Zahnrades 6 zu liegen kommt. Nach Eingabe der Verzahnungsdaten des Zahnrades 6 über den Eingang VD erfaßt die Impulsverarbeitungseinrichtung 36 beim Drehen des Zahnrades 6 durch den Drehantrieb 10 über die entsprechenden Impulszahlen aus dem sensor 34 den Zahnkopf- bzw. Zahnlückenwinkel und berechnet die in Fig. 4 gezeigte Stellung des Zahnrades 6, in der sich hier eine Zahnlücke des Zahnrades 6 mittig gegenüber einem Zahnkopf des Zahnrades 20 befindet. In dieser Stellung wird der Motor M an- und festgehalten. Sollte die vorher von Auge vorgenommene Relativpositionierung zwischen dem Sensor 34 und dem Zahnrad 6 hinsichtlich der Übereinstimmung von Zahnlücke/Zahnkopf der Zahnräder 6 und 20 einerseits und der durch die Impulsverarbeitungseinrichtung 36 berechneten Zahnkopf- bzw. Zahnlückenmitte andererseits noch zu wenig genau sein, kann die Stellung des Sensors 34 um den erforderlichen Betrag justiert werden. Wenn ein zu prüfendes Zahnrad mehrere gleichzeitig zu messende Verzahnungen aufweisen sollte, werden die beschriebenen Einrichtoperationen für jede Verzahnung mit je elnem separaten Sensor (nicht dargestellt) vorgenommen. Nachdem die in Fig. 4 gezeigte Stellung hergestellt worden ist, wird der Schlitten 14 mit Hilfe des Schlittens 16 in die Meßstellung verfahren, d.h. es wird der Betriebsachsabstand a zwischen den Zahnrädern 6 und 20 eingestellt. Nach Erreichen des spielfreien Eingriffs kann der eigentliche Meßvorgang beginnen, bei welchem die innerhalb einer vollständigen Umdrehung beider Zahnräder sich einstellenden Achsabstandsveränderungen ± Δa erfaßt werden, wie eingangs bezüglich des Standes der Technik beschrieben.

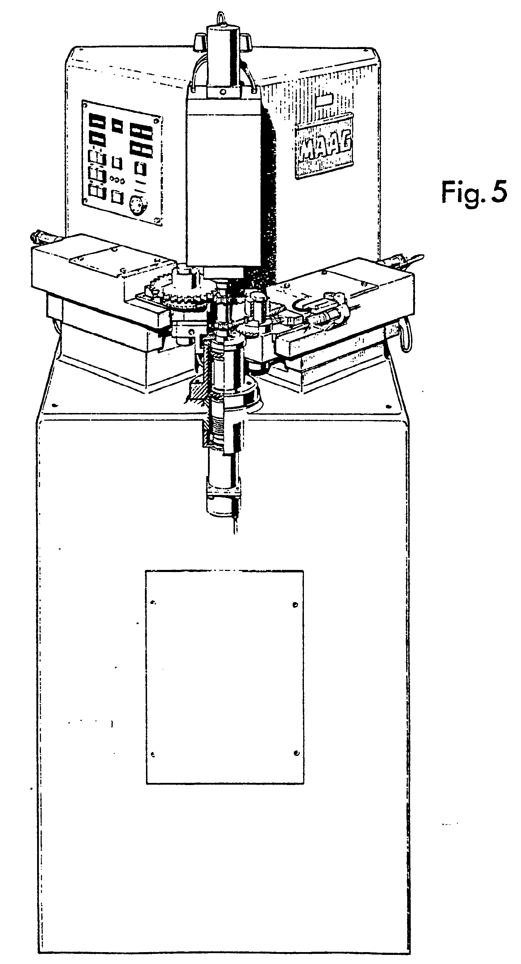

Fig. 5 zeigt ein automatisch arbeitendes Zweiflanken-Wälzprüfgerät, das in einer Transferstraße eingesetzt wird und lediglich pro Verzahnung festzustellen hat, ob die zulässige Toleranz bezüglich des Achsabstandes a über- oder unterschritten wird. In Fig. 6 sind gleiche Teile wie in den Fig. 1 bis 4 mit gleichen Bezugszahlen versehen. Übereinstimmende, aber zusätzlich vorhandene Teile tragen Bezugszahlen, die zusätzlich mit einem hochgesetzten Strich versehen sind. Das dargestellte Zweiflanken-Wälzprüfgerät ist in der Lage, zwei Verzahnungen von zwei fest miteinander verbundenen Zahnrädern 6, 6' gleichzeitig zu prüfen, wodurch eine enorme Meßgeschwindigkeit erzielt wird.

In der genannten Transferstraße werden die Zahnräder 6, 6' als ein Teil hergestellt und sollen anschließend sofort geprüft werden. Da deshalb die Gegenzahnräder, mit denen sie im tatsächlichen Betrieb in Eingriff sind, nicht zur Verfügung stehen, werden zur Wälzprüfung zwei Lehrräder 20, 20' Verwendet. Die äußerst genau hergestellten Lehrräder 20, 20' werden mit den auf der Transferstraße hergestellten Verzahnungen der zu prüfenden Zahnräder 6, 6' in Eingriff gebracht, und die Verschiebung der beiden Betriebsachsabstände a, a' zwischen den Lehrrädern und den ihnen zugeordneten Zahnrädern wird als Funktion dessen angesehen, wie stark die miteinander kämmenden Zahnflanken fehlerbehaftet sind. Da bekannt ist, daß jedes Lehrrad äußerst genau hergestellt und geführt ist, wird der Fehler des zu prüfenden Zahnrades sofort bestimmbar.

Gemäß Fig. 6 hat das Zweiflanken-Wälzprüfgerät zwei bewegliche Schlitten 14, 14', die beide unter Federdruck stehen (bei dem Schlitten 14' ist die dafür vorhandene Feder F erkennbar). Die Schlitten 14, 14' sind mittels ihrer zugeordneten Schlitten 16 bzw. 16' auf Flachführungen 18 bzw. 18' längs Achsen A bzw. A' verfahrbar, die die Mittelachse M1 der Aufnahmevorrichtung 4 und der vertikal verstellbaren Spitze 8 schneiden. Die beweglichen Schlitten 14, 14' sind mit Aufnahmevorrichtungen 12 bzw. 12' versehen. Die Aufnahmevorrichtungen 12, 12' haben jeweils ein Positionierrad 30 bzw. 30'. Jedes Positionierrad 30, 30' ist mit einem Paßstift 38 bzw. 38' versehen, der in einer entsprechenden Bohrung jedes Lehrrades 20 bzw. 20' aufgenommen wird. Neben dem Umfang jedes Positionierrades 30, 30' ist ein Magnet 22 bzw. 22' so angeordnet, wie es mit Bezug auf die Fig. 1 bis 4 bereits beschrieben worden ist. In vorliegendem Fall sind die Magnete 22, 22' ohne einen zwischengeschalteten Halter direkt in eine gekrümmte Nut 26 eingesetzt, die in Fig. 6 nicht sichtbar ist. Die Aufnahmevorrichtung 4 enthält eine kugelgelagerte Spindel, die über die Kupplung K mit dem Getriebe G kuppelbar ist, das mit dem Motor M verbunden ist. Bei der in Fig. 6 gezeigten Ausführungsform des Zweiflanken-Wälzprüfgerätes ist der Sensor 34 über seinen Halter 37 an der Aufnahmevorrichtung 4 in Umfangsrichtung einstellbar befestigt. Der Ausgang des Sensors 34 ist mit der Impulsverarbeitungseinrichtung 36 verbunden, die andererseits mit dem Motor M verbunden ist. Der Eingang VD für die Verzahnungsdaten der Zahnräder 6, 6' ist in Fig. 6 lediglich schematisch angedeutet. Auch im Falle des in Fig. 6 dargestellten Zweiflanken-Wälzprüfgerätes kann der Sensor 34 durch den Magnet 33 ersetzt werden.

Der Einrichtvorgang geht bei dem Zweiflanken-Wälzprüfgerät nach Fig. 6 folgendermaßen vor sich:

Während die Schlitten 14, 14' von der Mittelachse M1 ausreichend weit weggefahren sind, werden die Lehrzahnräder 20, 20' auf die Aufnahmevorrichtungen 12, 12' und die Paßstifte 38, 38' aufgesetzt. Die Aufnahmevorrichtungen 12, 12' haben hier keinen Antrieb und sind leichtgängig gelagert. Die Magnete 22, 22' bringen die Lehrzahnräder 20, 20' automatisch jeweils in eine der Darstellung in Fig. 4 entsprechende Stellung, wofür die Magnete 22, 22' vorher in ihren nicht dargestellten Führungsnuten entsprechend eingestellt worden sind. In der Transferstraße wird durch einen Roboterarm ein Doppelzahnrad 6, 6' zwischen die Aufnahmevorrichtung 4 und die Spitze 8 gebracht, zwischen denen es eingespannt wird. Die Zahnräder 6, 6' werden dann auf oben mit Bezug auf die Fig. 1 bis 4 beschriebene Weise in eine der Darstellung in Fig. 4 entsprechende Stellung gebracht, woraufhin die Schlitten 14, 14' in Richtung der Mittelachse M1 so weit verfahren werden, bis die Betriebsachsabstände a, a' eingestellt sind, so daß der eigentliche Meßvorgang beginnen kann.

Falls statt des Sensors 34 der Magnet 33 verwendet wird, wird vor dem Ausrichten der Zahnräder 6, 6' die Kupplung K ausgerückt, damit sich die Zahnräder 6, 6' leichtgängig durch den Magnet 33 einstellen lassen. In diesem Fall ist, wie oben dargelegt, die Impulsverarbeitungseinrichtung 36 nicht vorhanden. Das gleichzeitige Zusammenfahren der Schlitten 14, 14' ist möglich, weil hier die Zahnräder 6, 6' auf durch das Herstellungsverfahren definierte Weise stoffschlüssig miteinander verbunden sind, so daß die Magnete 22, 22' im voraus in eine entsprechende Relativlage gebracht werden können, in der jedes Lehrrad gegenüber seinem zu prüfenden Zahnrad eine Stellung wie in Fig. 4 einnimmt.

Die in den Fig. 1 bis 6 dargestellten Zweiflanken-Wälzprüfgeräte sind (ebenso wie das bekannte Zweiflanken-Wälzprüfgerät, das eingangs beschrieben ist zur Ermittlung von Verzahnungsfehlern an Gerad- und Schrägstirnrädern mit Außen- oder Innenverzahnungen sowie an Kegelrad- und Schneckengetrieben durch Abrollen der beiden Räder in spielfreiem Eingriff verwendbar. Bei der Prüfung von Schneckengetrieben kann es aber erforderlich sein, wegen des bei diesen zwischen Schnecke und Schnekkenrad gegebenen Übersetzungsverhältnisses, den Drehantrieb 10 nicht der Aufnahmevorrichtung 4 zuzuordnen, sondern an dem beweglichen Schlitten 14 und/oder 14' vorzusehen.

Bei dem in Fig. 6 dargestellten Ausführungsbeispiel wurden u.a. folgende im Handel erhältliche Bauteile verwendet:

5

| Bezugszeichen | Bezeichnung | Fabrik | Typenbezeichnung |
|---|---|---|---|
| 22, 22′ | Magnet | Vacumschm. (Hanau/BRD) | Vacomax 200 |
| 33 | Magnet | | |
| M | Schrittmotor | Berger | RDM 569/50 |
| GM | Gleichstrommotor | ITT Dunker | GR 52.0 |
| D | Drehgeber | MAAG | 929.4633.01 |
| 34 | Sensor | Baumer | IFR 04.26.25 |

## Patentansprüche

1. Zweiflanken-Wälzprüfgerät zur Ermittlung von Radverzahnungsfehlern, mit wenigstens zwei Radaufnahmevorrichtungen, von denen wenigstens eine auf einem unter Federdruck stehenden ersten Schlitten befestigt ist, der relativ zur anderen Aufnahmevorrichtung beweglich ist, wobei vor dem Ineingriffbringen der Verzahnungen wenigstens eines Räderpaares ein Zahnkopf eines Rades des Räderpaares auf eine Zahnlücke des anderen Rades des Räderpaares ausrichtbar ist, dadurch gekennzeichnet, daß für das Ausrichten dem einen Rad (20) ein auf die diesem Rad fest zugeordnete Verzahnung einwirkender Magnet (22) zum Herstellen einer bestimmten Raddrehstellung und dem anderen Rad (6) eine Positioniervorrichtung (10, 34, 36; 33) zugeordnet ist, mittels welcher das andere Rad (6) in eine bestimmte Relativlage zu der bestimmten Drehstellung des einen Rades (20) bringbar ist.

2. Wälzprüfgerät nach Anspruch 1, dadurch gekennzeichnet, daß der Magnet (22) ein Permanentmagnet ist.

3. Wälzprüfgerät nach Anspruch 1, dadurch gekennzeichnet, dass der Magnet (22) ein Elektromagnet ist.

4. Wälzprüfgerät nach einem der Ansprüche 1 bis 3, dadurch gekennzeichnet, dass der Magnet (22) und/oder die Positioniervorrichtung (10, 34, 36; 33) in Radumfangs- und/oder radialrichtung verstellbar ist.

5. Wälzprüfgerät nach einem der Ansprüche 1 bis 4, dadurch gekennzeichnet, dass die Positioniervorrichtung aus einem Magnet (33) besteht, der zum Herstellen der Relativlage auf die dem anderen Rad (6) fest zugeordnete Verzahnung einwirkt.

6. Wälzprüfgerät nach einem der Ansprüche 1 bis 4, dadurch gekennzeichnet, dass die Positioniervorrichtung einen Zahnkopf- oder Zahnlückensensor (34), der bei einer Relativbewegung zwischen dem anderen Rad (6) und dem Sensor Zahnköpfen oder -lücken entsprechende Impulse abgibt, und einen dem anderen Rad (6) zugeordneten Drehantrieb (10) aufweist, der durch Impulse einer Impulsverarbeitungseinrichtung (36) angesteuert wird, die die Impulse aus dem Sensor (34) mit den Verzahnungsdaten des anderen Rades (6) korreliert.

7. Wälzprüfgerät nach Anspruch 6, dadurch gekennzeichnet, dass der Drehantrieb (10) einen Schrittmotor (M) aufweist.

8. Wälzprüfgerät nach Anspruch 6, dadurch gekennzeichnet, dass der Drehantrieb (10) einen Gleichstrommotor (GM) mit einem durch die Impulse der Impulsverarbeitungseinrichtung (36) angesteuerten Drehgeber (D) aufweist.

9. Wälzprüfgerät nach einem der Ansprüche 6 bis 8, dadurch gekennzeichnet, dass der Sensor (34) ein berührungsfrei arbeitender induktiver Geber ist.

10. Wälzprüfgerät nach einem der Ansprüche 1 bis 9, dadurch gekennzeichnet, daß die dem einen Rad (20) fest zugeordnete Verzahnung dessen eigene Verzahnung ist.

11. Wälzprüfgerät nach einem der Ansprüche 1 bis 9, dadurch gekennzeichnet, daß die dem einen Rad (20) fest zugeordnete Verzahnung an einem Positionierrad (30) vorgesehen ist, das Teil einer der Aufnahmevorrichtungen (4, 12) ist, und mit dem das eine Rad (20) in definierter Lage koaxial kuppelbar ist.

12. Wälzprüfgerät nach Anspruch 11, dadurch gekennzeichnet, daß das Positionierrad (30) als Verzahnung an seinem Umfang Stege (32) mit derselben Teilung wie das eine Rad (20) oder einem ganzzahligen Bruchteil der Teilung des einen Rades trägt.

13. Wälzprüfgerät nach einem der Ansprüche 1 bis 12 mit zwei Schlitten, dadurch gekennzeichnet, daß das eine Rad (20) ein Lehrrad ist, das von der auf dem ersten Schlitten (14) befestigten Radaufnahmevorrichtung (12) aufgenommen ist;

daß der Magnet (22) zum Herstellen der bestimmten Raddrehstellung auf dem ersten Schlitten (14) befestigt ist;

daß das andere Rad (6) ein zu prüfendes Rad ist, das mit einem weiteren zu prüfenden Rad (6′) koaxial fest verbunden ist;

daß auf dem zweiten Schlitten (14′), der den gleichen Aufbau wie der erste Schlitten (14) hat, eine dritte Aufnahmevorrichtung (12′) befestigt ist, in der ein zweites, mit dem weiteren zu prüfenden Rad (6′) in Eingriff bringbares Lehrrad (20′) aufgenommen ist; und

daß für das Ausrichten auf dem zweiten Schlitten (14′) ein gleicher weiterer Magnet (22′) zum Herstellen einer weiteren bestimmten Raddrehstellung dem zweiten Lehrrad (20′) zugeordnet ist.

6

14. Wälzprüfgerät nach Anspruch 13, dadurch gekennzeichnet, daß der weitere Magnet (22') in Radumfangsrichtung verstellbar ist.

## Claims

1. Two-flank rolling tester for determining wheeltoothing errors, with at least two wheel-receiving devices, at least one of which is fastened to a first slide which is under spring pressure and which is mowable relative to the other receiving device, before the intermeshing of the toothings of at least one pair of wheels a toothed tip of one wheel of the pair of wheels being alignable with a tooth space of the other wheel of the pair of wheels, characterized in that, for the alignment, one wheel (20) is assigned a magnet (22) which acts on the toothing associated fixedly with this wheel and which obtains a specific rotary position of the wheel, and the other wheel (6) is assigned a positioning device (10, 34, 36; 33), by means of which the other wheel (6) can be brought into a specific relative position in relation to the specific rotary position of the first wheel (20).

2. Rolling tester according to Claim 1, characterized in that the magnet (22) is a permanent magnet.

3. Rolling tester according to Claim 1, characterized in that the magnet (22) is an electromagnet.

4. Rolling tester according to one of Claims 1 to 3, characterized in that the magnet (22) and/or the positioning device (10, 34, 36; 33) is adjustable in the circumferential direction of the wheel and/or in the radial direction.

5. Rolling tester according to one of Claims 1 to 4, characterized in that the positioning device consists of a magnet (33) which, to obtain the relative position, acts on the toothing associated fixedly with the other wheel (6).

6. Rolling tester according to one of Claims 1 to 4, characterized in that the positioning device has a tooth-tip or tooth-space sensor (34), which in response to a relative movement between the other wheel (6) and the sensor emits pulses corresponding to tooth tips or to tooth spaces, and a rotary drive (10) assigned to the other wheel (6) and activated by pulses from a pulseprocessing means (36) which correlates the pulses from the sensor (34) with the toothing data of the other wheel (6).

7. Rolling tester according to Claim 6, characterized in that the rotary drive (10) has a stepping motor (M).

8. Rolling tester according to Claim 6, characterized in that the rotary drive (10) has a direct-current motor (GM) with a rotation transmitter (D) activated by the pulses from the pulse-processing means (36).

9. Rolling tester according to one of Claims 6 to 8, characterized in that the sensor (34) is an inductive transmitter working in a contactless manner.

10. Rolling tester according to one of Claims 1 to 9, characterized in that the toothing associated fixedly with the first wheel (20) is its own toothing.

11. Rolling tester according to one of Claims 1 to 9, characterized in that the toothing associated fixedly with the first wheel (20) is provided on a positioning wheel (30) which is part of one of the receiving devices (4, 12) and to which the first wheel (20) can be coupled coaxially in a specific position.

12. Rolling tester according to Claim 11, characterized in that the positioning wheel (30) carries on its circumference, as toothing, webs (32) having the same division as the first wheel (20) or an integral fraction of the division of the first wheel.

13. Rolling tester according to one of Claims 1 to 12 with two slides, characterized in that the first wheel (20) is a gauging wheel which is received by the wheelreceiving device (12) fastened to the first slide (14), in that the magnet (22) for obtaining the specific rotary position of the wheel is fastened to the first slide (14), in that the other wheel (6) is a wheel to be tested, which is fixedly connected coaxially to a further wheel (6') to be tested, in that fastened to the second slide (14') having the same design as the first slide (14) is a third receiving device (12'), in which is received a second gauging wheel (20') which can be brought into engagement with the further wheel (6') to be tested, and in that, for the alignment, on the second slide (14') an identical further magnet (22') for obtaining a further specific rotary position of the wheel is assigned to the second gauging wheel (20').

14. Rolling tester according to Claim 13, characterized in that the further magnet (22') is adjustable in the circumferential direction of the wheel.

## Revendications

1. Appareil pour contrôler, par roulement, des dentures à deux flancs, servant à déterminer des défauts de dentures de roues, comportant au moins deux dispositifs récepteurs pour des roues, dont l'un au moins est fixé sur un premier chariot, qui est soumis à la pression d'un ressort et est mobile par rapport à l'autre dispositif récepteur, et dans lequel, avant l'engrènement des dentures d'au moins un couple de roues, une tête d'une dent d'une roue du couple de roues peut être alignée sur un entredent de l'autre roue du couple de roues, caractérisé en ce que, pour l'alignement, à une roue (20) est associé un aimant (22), qui agit sur la denture associée de façon fixe à cette roue et sert à régler une position déterminée en rotation de la roue et à l'autre roue (6) est associé un dispositif de positionnement (10, 34, 36; 33), à l'aide duquel l'autre roue (6) peut être amenée dans une position relative déterminée par rapport à la position déterminée en rotation de la première roue (20).

2. Appareil pour contrôler des dentures par roulement, selon la revendication 1, caractérisé en ce que l'aimant (22) est un aimant permanent.

3. Appareil pour contrôler des dentures par roulement, selon la revendication 1, caractérisé en ce que l'aimant (22) est un électroaimant.

4. Appareil pour contrôler des dentures par roulement, selon l'une des revendications 1 à 3, caractérisé en ce que l'aimant (22) et/ou le dispositif depositionnement (10, 34, 36; 33) est déplaçable dans la direction circonférentielle et/ou dans la direction radiale des pignons.

5. Appareil pour contrôler des dentures par roulement, selon l'une des revendications 1 à 4, caractérisé en ce que le dispositif de positionnement est constitué par un aimant (33), qui agit de manière à régler la position relative sur la denture associée de façon fixe à l'autre roue (6).

6. Appareil pour contrôler des dentures par roulement, selon l'une des revendications 1 à 4, caractérisé en ce que le dispositif de positionnement comporte un capteur (34) de la tête d'une dent ou d'un entredent, qui délivre des impulsions correspondant à des têtes de dents ou à des entredents, dans le cas d'un déplacement relatif entre l'autre roue (6) et le capteur, et un dispositif d'entraînement en rotation (10), qui est associé à l'autre roue (6) et est commandé par des impulsions délivrées par un dispositif (36) de traitement d'impulsions, qui met en corrélation les impulsions délivrées par le capteur (34) et les données de la denture de l'autre pignon (6).

7. Appareil pour contrôler des dentures par roulement, selon la revendication 6, caractérisé en ce que le dispositif d'entraînement en rotation (10) comporte un moteur pas-à-pas (M).

8. Appareil pour contrôler des dentures par roulement, selon la revendication 6, caractérisé en ce que le dispositif d'entraînement en rotation (10) comporte un moteur à courant continu (GM) possédant un résolveur (D) commandé par les impulsions du dispositif (36) de traitement des impulsions.

9. Appareil pour contrôler des dentures par roulement, selon l'une des revendications 6 à 8, caractérisé en ce que le capteur (34) est un transmetteur inductif travaillant sans contact.

10. Appareil pour contrôler des dentures par roulement, selon l'une des revendications 1 à 9, caractérisé en ce que la denture associée de façon fixe à la première roue (20) est la denture propre de cette roue.

11. Appareil pour contrôler des dentures par roulement, selon l'une des revendications 1 à 9, caractérisé en ce que la denture associée de façon fixe à la première roue (20) est prévue sur une roue de positionnement (30), qui fait partie de l'un des dispositifs récepteurs (4, 12), et à laquelle la première roue (20) peut être accouplée coaxialement dans une position définie.

12. Appareil pour contrôler des dentures par roulement, selon la revendication 11, caractérisé en ce que la roue de positionnement (30) porte, sur sa périphérie, en tant que denture, des barrettes (32) présentant le même pas de répartition que la première roue (20), ou une fraction, égale à un nombre entier, du pas de répartition de la première roue.

13. Appareil pour contrôler des dentures par roulement, selon l'une des revendications 1 à 12, comprenant deux chariots, caractérisé en ce

qu'une première roue (20) est une roue formant calibre, qui est logée dans le dispositif récepteur (12) fixé sur le premier chariot (14);

que l'aimant (22) servant à régler la position déterminée en rotation de la roue est fixé sur le premier chariot (14);

que l'autre roue (6) est une roue devant être contrôlée, qui est reliée rigidement et coaxialement à une autre roue (6') devant être contrôlée;

que sur le second chariot (14'), qui possède la même constitution que le premier chariot (14), se trouve fixé un troisième dispositif récepteur (12'), dans lequel est logée une seconde roue formant calibre (20'), qui peut êtreamenée à engrener avec l'autre roue (6') à controler; et

que, pour l'alignement, sur le second chariot (14') un autre aimant identique (22') servant à régler une autre position déterminée en rotation de la roue est associé à la seconde roue formant calibre (20').

14. Appareil pour contrôler des dentures par roulement, selon la revendication 13, caractérisé en ce que l'autre aimant (22') est réglable dans la direction circonférentielle de la roue.

# Fig. 1

# Fig. 2

# Fig. 3

# Fig. 4

Fig. 5

Fig. 6

EP 0 162 803 B1